# EUROPÄISCHE PATENTANMELDUNG

(11) **EP 2 208 979 A2**
(43) Veröffentlichungstag der Anmeldung: **21.07.2010**
(21) Anmeldenummer: 09015306.5
(22) Anmeldetag: 16.12.2009
(51) Int. Cl.: G01L 5/28

(54) **Verfahren zur Prüfung von Kraftfahrzeugbremsen**

(30) Priorität: 14.01.2009 DE 102009004584
(71) Anmelder: Snap-on Equipment GmbH, 64319 Pfungstadt (DE)
(72) Erfinder: Lemke, Peter, 84579 Unterneukirchen (DE); Seibl, Erich, 84577 Tüssling (DE)
(74) Vertreter: Eisenführ, Speiser & Partner

(57) **Zusammenfassung**

Bei einem Verfahren zur Prüfung von Kraftfahrzeugbremsen wird ein bei Schlupf auftretender maximaler Bremskraftwert (Fₘₐₓ) bestimmt und anschließend die Bremsdiagnose unterhalb dieses maximalen Bremskraftwertes (Fₘₐₓ) durchgeführt.

## Beschreibung

Die Erfindung betrifft ein Verfahren zur Prüfung von Kraftfahrzeugbremsen.

Aus dem Stand der Technik sind Bremsprüfstände bekannt mit zwei parallel zueinander ausgerichteten Rollen, auf welche ein Kraftfahrzeugrad aufgefahren wird, so dass es zwischen und oberhalb dieser beiden Rollen zu liegen kommt. Wenigstens eine der beiden Rollen wird durch einen Antrieb angetrieben, um ihrerseits den aufliegenden Kraftfahrzeugreifen in Drehbewegung zu versetzen. Der Antrieb treibt die Rollen mit einer bestimmten Geschwindigkeit an und hält diese auch dann nahezu konstant, wenn durch das auf den Rollen abgebremste Kraftfahrzeugrad ein Bremsmoment entgegenwirkt. Das Bremsmoment kann mittels einer Kraftmesseinrichtung, wie beispielsweise einem Biegebalken mit Dehnungsmessstreifen, gemessen werden.

Zwischen den beiden Rollen kann eine Tastrolle vorgesehen sein, die vertikal verschieblich gelagert ist und dabei eine Schaltfunktion übernimmt. Sobald das Kraftfahrzeugrad auf die beiden Rollen auffährt, wird die dazwischen liegende Tastrolle nach unten gedrückt, schaltet die Prüfung frei und startet den Rollenantrieb. Steigt beim Abbremsen des Kraftfahrzeugrades die Bremskraft über die Reibungskraft zwischen dem Kraftfahrzeugreifen und den Rollen, beginnt das Rad zu schlupfen. Über die Drehzahl der Tastrolle, an die der Kraftfahrzeugreifen anliegt, wird der Schlupf erfasst und bei Überschreiten eines eingestellten Maximalwertes der Prüfstand abgeschaltet. Dies ist als "automatische Schlupfabschaltung" bekannt und beispielsweise im "Kraftfahrtechnischen Taschenbuch" von Bosch (Hrsg.: Robert Bosch GmbH, 2007, 26. Auflage, S. 1156-1157) beschrieben.

Es sind Rollenprüfstände mit berührungsloser Radabtastung bekannt, bei denen zur Schlupfabschaltung ein abfallender Bremskraftverlauf erkannt wird. Demzufolge akzeptiert der Bremsprüfstand nur monoton ansteigende Bremsverläufe.

Aufgabe der Erfindung ist es daher, ein Verfahren zur Prüfung von Kraftfahrzeugbremsen bereitzustellen, bei dem insbesondere auch bei berührungsloser Radabtastung eine ausreichende Bremsdiagnose und Fehleranalyse erreicht wird.

Zu diesem Zweck sieht die Erfindung ein Verfahren zur Prüfung von Kraftfahrzeugbremsen vor, bei dem ein bei Schlupf auftretender maximaler Bremskraftwert bestimmt wird und anschließend die Bremsdiagnose unterhalb dieses maximalen Bremskraftwertes durchgeführt wird.

Der Erfindung beruht auf dem Grundgedanken, dass Schlupf auftritt, sobald die Bremskraft des Kraftfahrzeugreifens höher als die Reibungskraft zwischen dem Kraftfahrzeugreifen und den Rollen ist. Wenn also der Zustand des Kraftfahrzeugreifens während der Prüfung von Rollreibung auf Gleitreibung wechselt, kann das Bremskraftmoment nicht mehr voll übertragen werden und der Bremskraftwert bricht ein. Der maximal mögliche Bremskraftwert, welcher für die nachfolgende Bremsdiagnose wichtig ist, tritt demnach bei Schlupf auf. Deshalb wird der maximale Bremskraftwert in einem sogenannten Lernzyklus ermittelt und die weitere Bremsdiagnose unterhalb dieses ermittelten maximalen Bremskraftwertes durchgeführt. Bei der Bremsdiagnose kann dann die Bremskraft beliebig variieren. Ein Schlupf kann nicht auftreten, da die Bremsdiagnose mit Bremskräften durchgeführt wird, die niedriger als der maximale Bremskraftwert sind.

Vorzugsweise kann der auftretende maximale Bremskraftwert bei Schlupfabschaltung bestimmt werden. Der Prüfstand wird mittels einer Schlupfabschaltung automatisch abgeschaltet, sobald die Bremskraft höher als die Reibungskraft zwischen dem Kraftfahrzeugreifen und den Rollen wird. Anschließend wird die Bremsdiagnose unterhalb dieses maximalen Bremskraftwertes durchgeführt. Während dieser folgenden Bremsdiagnose kann vorteilhafterweise keine automatische Schlupfabschaltung auftreten, da die Bremsdiagnose mit Bremskräften durchgeführt wird, die niedriger als der maximale Bremskraftwert sind. So kann eine Bremsdiagnose mit variierenden Bremskraftverläufen durchgeführt werden, ohne dass Schlupf auftritt.

Die Durchführung der Bremsdiagnose beginnt bevorzugt nach der Bestimmung des maximalen Bremskraftwertes, insbesondere unmittelbar nach der Bestimmung des maximalen Bremskraftwertes, d.h. der Antrieb für die Rollen schaltet sofort nach der Schlupfabschaltung wieder ein. Dadurch ist eine schnelle Bremsdiagnose, also eine zeitsparende Bremsenprüfung, möglich, was sich im Werkstatteinsatz auszeichnet.

Es kann ein Grenzwert für den Bremskraftwert bestimmt werden, der geringer als die maximale Bremskraft ist, und die Bremsdiagnose kann unterhalb dieses Grenzwertes durchgeführt werden. Der relative Grenzwert, bis zu der die Bremsdiagnose durchgeführt wird, ist beispielsweise die gesetzlich vorgeschriebene Bremskraft einer Feststellbremse (Handbremse). Die Feststellbremse muss eine geringere Bremskraft als die Fußbremse (Betriebsbremse) aufbringen. Durch die Einstellung des Grenzwertes auf die notwendige Bremskraft der Feststellbremse kann diese exakt während der Bremsdiagnose geprüft und eingestellt werden.

Das Verfahren wird bevorzugt bei einem Rollenbremsprüfstand verwendet, der wenigstens eine Sensoreinheit zur berührungslosen, insbesondere optoelektronischen Erfassung der Position des Kraftfahrzeugrades aufweist. Bei solchen Rollenbremsprüfständen wird die aus dem Stand der Technik bekannte Tastrolle eingespart. Eine Sensoreinheit erfasst die Position des Kraftfahrzeugrades und erkennt, wenn sich das Kraftfahrzeugrad auf den Rollen befindet. Sobald dies erkannt wird, wird die Bremsprüfung gestartet bis Schlupf auftritt. Der bei Schlupf auftretende maximale Bremskraftwert wird bestimmt und anschließend die Bremsdiagnose unterhalb dieses maximalen Bremskraftwertes durchgeführt. Vorteilhafterweise kann aufgrund der Bestimmung des bei Schlupf auftretenden maximalen Bremskraftwert und der anschließenden Durchführung der Bremsdiagnose unterhalb dieses maximalen Bremskraftwertes bei Rollenbremsprüfständen mit berührungsloser Radabtastung eine Bremsdiagnose auch mit variierendem Bremskraftverlauf durchgeführt werden.

Genauso gut kann das Verfahren bei einem Rollenbremsprüfstand mit einer Tastrolle angewendet werden, wobei der bei Schlupf auftretende maximale Bremskraftwert bestimmt wird.

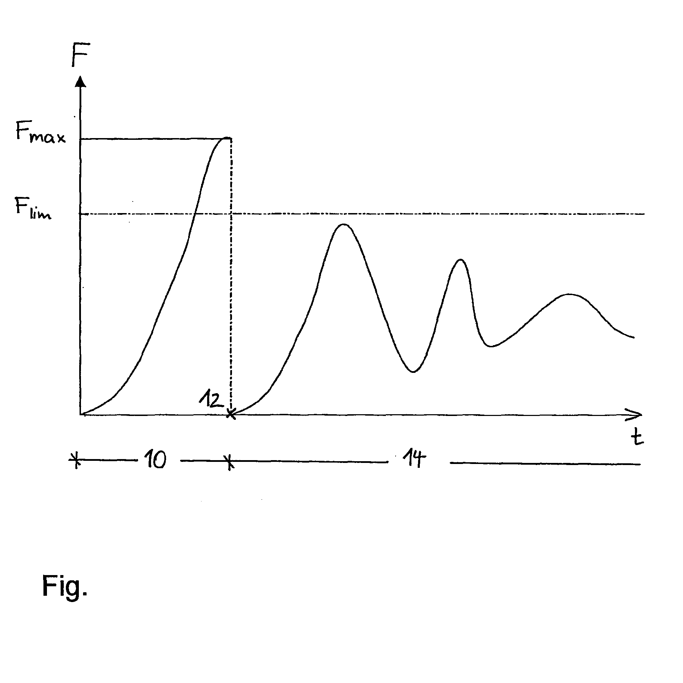

Weitere Merkmale und Vorteile ergeben sich aus der nachfolgenden Beschreibung und der Zeichnung. Nachfolgend wird eine Ausführungsform anhand einer einzigen Zeichnung gezeigt.

In der Figur ist der Signalverlauf an einem Bremsenprüfstand gezeigt, wobei die Bremskraft F über die Zeit t aufgetragen ist.

Nach dem Einfahren des Kraftfahrzeugs auf den Rollenbremsprüfstand wird die Bremsprüfung gestartet, d.h. die Rollen durch einen Antrieb angetrieben. Ein Kraftfahrzeugrad wird abgebremst und das wirkende Bremsmoment kann mittels einer Kraftmesseinrichtung gemessen werden. Steigt beim Abbremsen des Kraftfahrzeugrades die Bremskraft über die Reibungskraft zwischen dem Kraftfahrzeugreifen und den Rollen, beginnt das Rad zu schlupfen und der Prüfstand wird abgeschaltet. Die dabei auftretende maximale Bremskraft Fₘₐₓ wird bestimmt. Der Abschnitt der Bremsprüfung bis zur Abschaltung des Antriebes aufgrund von Schlupf wird als Lernzyklus 10 bezeichnet. Um diesen Lernzyklus zeitlich möglichst kurz zu gestalten, wird so gebremst, dass ein kontinuierlich rasch ansteigendes Bremsmoment entsteht.

Nach der Schlupfabschaltung wird der Antrieb sofort wieder eingeschaltet (Bezugszeichen 12 in Figur) und die Bremsdiagnose unterhalb dieses maximalen Bremskraftwertes Fₘₐₓ durchgeführt. Die Bremskraft kann unterhalb des maximalen Bremskraftwertes Fₘₐₓ beliebig variieren, so dass beispielsweise eine Unrundheit der Bremsscheiben erkannt und ausgeglichen werden kann. Der Abschnitt der Bremsdiagnose wird als Diagnosezyklus 14 bezeichnet.

Es kann auch ein Grenzwert für den Bremskraftwert Fₗᵢₘ bestimmt werden, der geringer als der maximale Bremskraftwert Fₘₐₓ ist, und der Diagnosezyklus 14 kann unterhalb dieses Grenzwertes durchgeführt werden. Der Grenzwert, bis zu der die Bremsdiagnose durchgeführt wird, ist beispielsweise die gesetzlich vorgeschriebene Bremskraft einer Feststellbremse. Durch die Einstellung des Grenzwertes auf die notwendige Bremskraft der Feststellbremse kann diese exakt während der Bremsdiagnose auf die gesetzlich vorgeschriebene Bremskraft eingestellt werden.

Das beschriebene Verfahren kann auch Anwendung finden bei einem Rollenprüfstand mit einer automatischen Schlupfabschaltung.

## Patentansprüche

1. Verfahren zur Prüfung von Kraftfahrzeugbremsen, bei dem ein bei Schlupf auftretender maximaler Bremskraftwert (Fₘₐₓ) bestimmt wird und anschließend die Bremsdiagnose unterhalb dieses maximalen Bremskraftwertes (Fₘₐₓ) durchgeführt wird.

2. Verfahren nach Anspruch 1, **dadurch gekennzeichnet, das** der auftretende maximale Bremskraftwert (Fₘₐₓ) bei Schlupfabschaltung bestimmt wird.

3. Verfahren nach Anspruch 1 oder 2, **dadurch gekennzeichnet, dass** nach der Bestimmung des maximalen Bremskraftwertes (Fₘₐₓ) die Durchführung der Bremsdiagnose beginnt.

4. Verfahren nach einem der vorhergehenden Ansprüche, **dadurch gekennzeichnet, dass** ein Grenzwert für den Bremskraftwert (Fₗᵢₘ) bestimmt wird und die Bremsdiagnose unterhalb dieses Grenzwertes durchgeführt wird.

5. Verfahren nach einem der vorhergehenden Ansprüche, **dadurch gekennzeichnet, dass** das Verfahren bei einem Rollenbremsprüfstand verwendet wird, bei dem die Positionierung eines Kraftfahrzeugrades auf Prüfstellen erfasst wird.

6. Verfahren nach einem der vorhergehenden Ansprüche, **dadurch gekennzeichnet, dass** nach Erfassung des Kraftfahrzeugrades das angetriebene Kraftfahrzeugrad so abgebremst wird, dass ein kontinuierlich ansteigender Bremskraftwert bis zum Schlupf erreicht wird.

7. Verfahren nach einem der vorhergehenden Ansprüchen, **dadurch gekennzeichnet, dass** das Rad berührungslos, insbesondere optoelektronisch abgetastet wird.
